# EUROPEAN PATENT APPLICATION

(11) **EP 3 308 889 A1**
(43) Date of publication of application: **18.04.2018**
(21) Application number: 16807638.8
(22) Date of filing: 13.06.2016
(51) Int. Cl.: B23C 5/10, B23C 5/00

(54) **TAPERED END MILL AND CUTTING HEAD**

(30) Priority: 12.06.2015 JP 2015119216
(71) Applicant: Mitsubishi Materials Corporation, Chiyoda-ku Tokyo 100-8117 (JP)
(72) Inventor: AZEGAMI, Takayuki, Tokyo 100-8117 (JP)
(74) Representative: Hoffmann Eitle
(86) International application number: PCT/JP2016/067507
(87) International publication number: WO 2016/199935

(57) **Abstract**

A tapered end mill includes a cutting edge portion (7) which includes an end cutting edge (5) which extends from an inner peripheral side of an end mill body (1) to an outer peripheral side thereof and a tapered peripheral cutting edge (6) which extends from an outer peripheral end of the end cutting edge (5) to a rear end side and has a cutting edge diameter which gradually increases toward the rear end side, the cutting edge portion (7) being provided on a distal end portion of the end mill body (1) which rotates around an axial line. A truncated conical tapered neck portion (8) having an outer diameter which gradually increases toward the rear end side is provided on the rear end side of the cutting edge portion (7), and a columnar straight neck portion (12) is provided about the axial line (O) between the cutting edge portion (7) and the tapered neck portion (8).

## Description

### Technical Field

The present invention relates to a tapered end mill, which has a cutting edge portion having an end cutting edge and a tapered peripheral cutting edge which extends from an outer peripheral end of the end cutting edge to a rear end side thereof and has a cutting edge diameter which gradually increases toward the rear end side on a distal end portion of an end mill body to be rotated around an axial line, and to a cutting head which can be used in an exchangeable head end mill having a holder on the rear end side of the end mill body and a cutting head detachably attached to the distal end of the holder.

Priority is claimed on Japanese Patent Application No. 2015-119216, filed on June 12, 2015, the content of which is incorporated herein by reference.

### Background Art

For example, PTL 1 discloses a tapered end mill in which a tapered portion (tapered neck portion) having a taper half included angle θ is formed in a head portion (neck portion) between an edge portion (cutting edge portion) having a cutting edge (tapered peripheral cutting edge) formed an outer periphery and a shank portion.

### Citation List

### Patent Literature

[PTL 1] Japanese Unexamined Patent Application, First Publication No. 2010-115736

### Summary of Invention

### Technical Problem

In the tapered end mill disclosed in PTL 1, the tapered peripheral cutting edge and the tapered neck portion have the same taper half included angle θ as each other, an outer peripheral surface of the tapered neck portion is positioned on a virtual conical surface which is obtained by extending a truncated conical surface formed by a rotational locus of the tapered peripheral cutting edge around the axial line to the rear end side. Accordingly, in order to perform deep shoulder milling machining or groove machining which moves an end mill body to a distal end side in a direction of a taper half included angle so as to extend a machining wall surface formed by the tapered peripheral cutting edge, there is a concern that chips are bitten into a portion between the tapered neck portion and the machining wall surface or the tapered neck portion comes into contact with the machining wall surface.

The present invention is made in consideration of the above-described circumstances, and an object thereof is to provide a tapered end mill in which biting of chips or a contact with the machining wall surface does not occur even in a case where the above-described deep shoulder milling machining or groove machining is performed, and a cutting head in a case where the tapered end mill is an exchangeable head end mill.

### Solution to Problem

In order to solve the above-described problems and to achieve the object, according to an aspect of the present invention, there is provided a tapered end mill (hereinafter, referred to as a "tapered end mill of the present invention"), including: a cutting edge portion which includes an end cutting edge which extends from an inner peripheral side of an end mill body to an outer peripheral side thereof and a tapered peripheral cutting edge which extends from an outer peripheral end of the end cutting edge to a rear end side and has a cutting edge diameter which gradually increases toward the rear end side, the cutting edge portion being provided on a distal end portion of the end mill body which rotates around an axial line, in which a truncated conical tapered neck portion having an outer diameter which gradually increases toward the rear end side is provided on the rear end side of the cutting edge portion, and a columnar straight neck portion is provided about the axial line between the cutting edge portion and the tapered neck portion.

Accordingly, in the tapered end mill, the columnar straight neck portion about the axial line of the end mill body is provided between the cutting edge portion having the tapered peripheral cutting edge and the tapered neck portion having the outer diameter which gradually increases toward the rear end side. Therefore, the outer peripheral surfaces of the straight neck portion and the tapered neck portion are retreated to the inner peripheral side of the end mill body with respect to a virtual conical surface which is obtained by extending a truncated conical surface formed by a rotational locus of the tapered peripheral cutting edge around the axial line to the rear end side. For this reason, in a case where the above-described deep shoulder milling machining or groove machining is performed, it is possible to secure a clearance between the machining wall surface formed in advance by the tapered peripheral cutting edges and the end mill body, and thus, it is possible to prevent biting of chips or a contact between the end mill body and the machining wall surface.

Moreover, in the tapered end mill, a neck half included angle formed between an outer peripheral surface of the tapered neck portion and the axial line is set to be larger than an peripheral half included angle formed between a rotational locus of the tapered peripheral cutting edge around the axial line and the axial line, and thus, it is possible to increase rigidity of the tapered neck portion. Accordingly, the outer peripheral surfaces of the straight neck portion and the tapered neck portion are retreated with respect to the virtual conical surface, and thus, it is possible to prevent the rigidity of the end mill body from being damaged and the end mill body from being curved or bent during machining, and it is possible to prevent vibrations or the like from easily occurring.

In addition, in this way, in the case where the neck half included angle is set to be larger than the peripheral half included angle, the circle formed on the rear end of the outer peripheral surface of the tapered neck portion is positioned on the virtual conical surface obtained by extending the truncated conical surface formed by the rotational locus of the tapered peripheral cutting edge around the axial line to the rear end side. Accordingly, a length from the distal end of the tapered peripheral cutting edge to the circle on the rear end of the tapered neck portion in the direction of the axial line can be the same as a length of a tapered end mill of the related art in which the tapered peripheral cutting edge and the tapered neck portion have the same taper half included angle as each other and the outer peripheral surface of the tapered neck portion is positioned on the virtual conical surface obtained by extending the truncated conical surface formed by the rotational locus of the tapered peripheral cutting edge around the axial line to the rear end side. Accordingly, the length from the distal end of the outer peripheral edge to the rear end of the tapered neck portion in the direction of the axial line does not become longer by the length corresponding to the provision of the straight neck portion, and thus, it is possible to prevent the end mill body from being curved or bent during cutting and it is possible to further reliably prevent vibrations or the like.

Moreover, the tapered end mill of the present invention is applied to a tapered ball end mill in which the rotational locus of the end cutting edge around the axial line is formed so as to have a hemispherical shape having a center on the axial line and is used to form a recessed portion having a curved bottom surface in a mold, the clearance can be secured on the wall of the recessed portion as described above, which is particularly effective. However, the tapered end mill of the present invention can be applied to not only the above-described tapered ball end mill but also a square-shaped tapered end mill in which end cutting edges extend approximately along a plane orthogonal to an axial line and intersect outer peripheral edges with angles or a tapered radius end mill in which corner portions of end cutting edges and outer peripheral edges are formed in convex curve shapes such as an arc.

In addition, the tapered end mill of the present invention can be applied to a exchangeable head tapered end mill in which an end mill body includes a holder on the rear end side and the cutting head which is detachably attached to the distal end of the holder. In this case, the tapered neck portion is provided on the holder and the cutting edge portion and the straight neck portion are provided on the cutting head. Accordingly, the straight neck portion can be formed of a material having the same high hardness as that of the cutting edge portion, and it is possible to further improve securing of the rigidity. In addition, the tapered neck portion having the outer diameter which gradually increases toward the rear end side is formed in the holder which has lower hardness and costs than those of the cutting head, and thus, it is possible to reduce the cost.

Moreover, a cutting head (hereinafter, referred to as a "cutting head of the present invention") according to another aspect of the present invention is a cutting head in the exchangeable head tapered end mill, that is, the cutting edge portion is provided in the distal end portion, the straight neck portion is provided in a rear end portion, and the attachment section which detachably attaches the cutting head to the holder is provided in the straight neck portion.

In a case where the thread part twisted around the axial line is provided in the attachment section and the cutting head is attached to the holder by screw-fitting, an engaging recess with which a work tool rotating the cutting head around the axial line engages is provided on the outer peripheral surface of the straight neck portion. Accordingly, it is possible to secure a larger clearance between the straight neck portion and the machining wall surface in the engaging recess, and it is possible to more reliably prevent biting of chips or the like.

### Advantageous Effects of Invention

As described above, according to the present invention, even in a case where the end mill body moves to the distal end side in the direction of the peripheral half included angle and deep shoulder milling machining or groove machining is performed to extend the machining wall surface formed by the tapered peripheral cutting edges in advance, it is possible to secure a clearance between the machining wall surface formed by the tapered peripheral cutting edges in advance and the end mill body. Accordingly, it is possible to prevent chips from being bitten into a portion between the end mill body and the machining wall surface or the end mill body from coming into contact with the machining wall surface, and thus, it is possible to smoothly perform cutting.

### Brief Description of Drawings

FIG. 1 is a perspective view showing an embodiment of the present invention.
FIG. 2 is a side view of the embodiment shown in FIG. 1.
FIG. 3 is a partially broken side view of the embodiment shown in FIG. 1.
FIG. 4 is a side view showing an embodiment of a cutting head of the present invention used in the embodiment shown in FIG. 1.

### Description of Embodiments

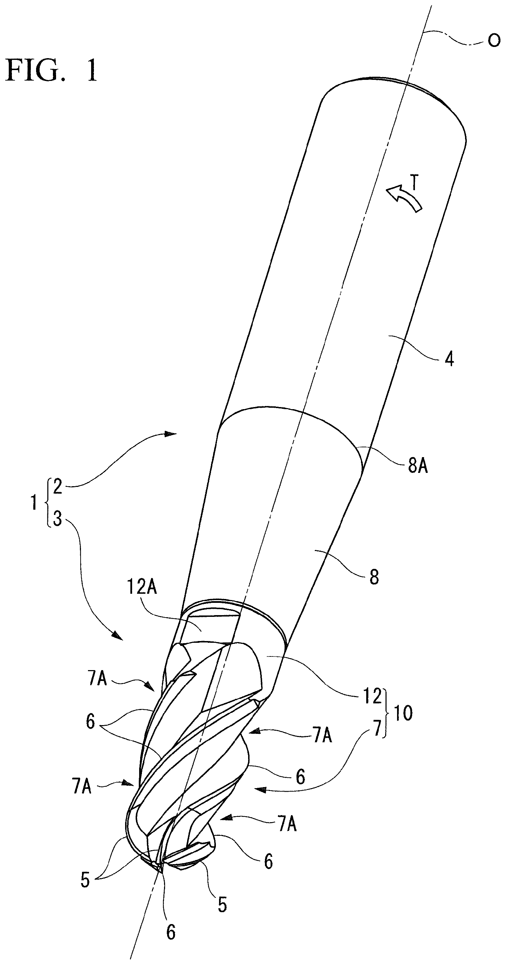

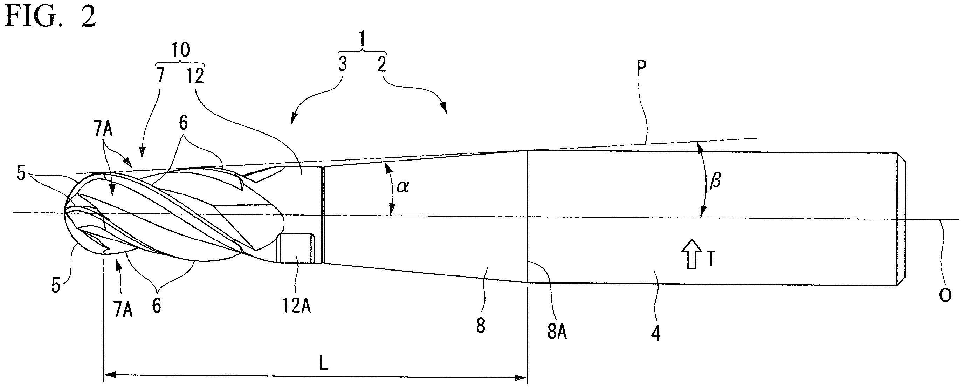

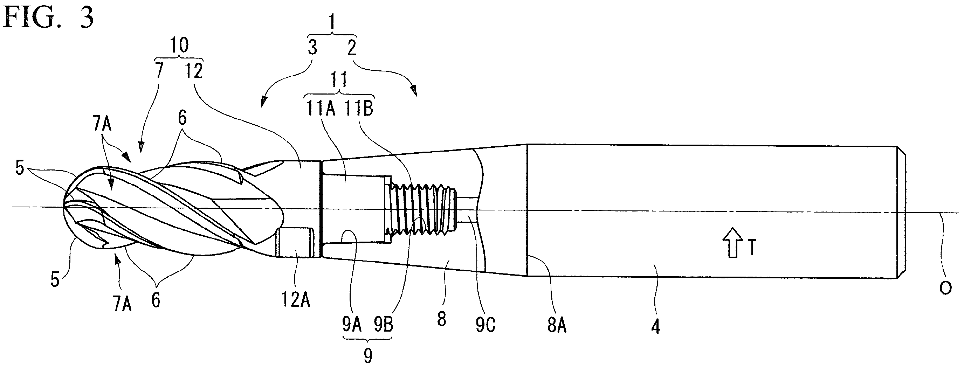

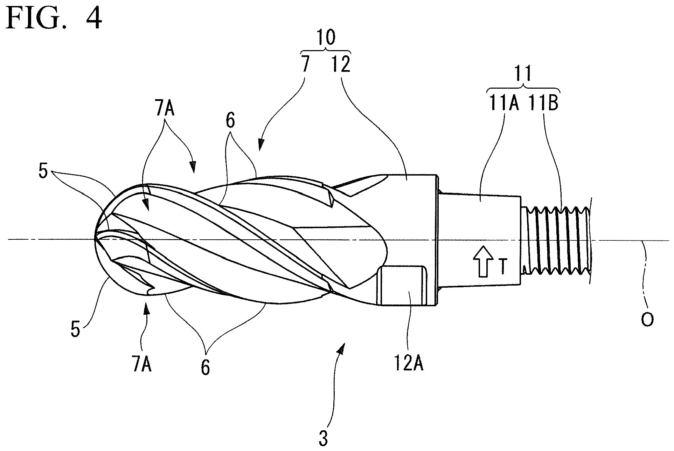

FIGS. 1 to 3 show an embodiment of a tapered end mill of the present invention. The tapered end mill of the present embodiment is an exchangeable head tapered end mill in which an end mill body 1 includes a holder 2 on a rear end side (upper right side in FIG. 1 and right side in FIGS. 2 and 3) and a cutting head 3 which is detachably attached to a distal end (lower left side in FIG. 1 and left side in FIGS. 2 and 3) of the holder 2, and FIG. 4 shows an embodiment of the cutting head 3.

The end mill body 1 is formed in a shaft shape about an axial line O, a rearmost end portion (rearmost end portion of the holder 2) of the end mill body 1 becomes a shank portion 4, and a cutting edge portion 7 having end cutting edges 5 and tapered peripheral cutting edges 6 is formed on a most distal end portion (a most distal end portion of the cutting head 3) of the end mill body 1. In the tapered end mill, the shank portion 4 is held by a rotary shaft of a machine tool, and in general, the tapered end mill is fed in a direction orthogonal to the axial line O while rotating in an end mill rotation direction T around the axial line O. Accordingly, the tapered end mill performs shoulder milling machining or groove machining on a workpiece by the cutting edge portion 7.

The holder 2 is integrally formed of a metal material such as a steel material, the shank portion 4 of the holder 2 is a columnar shape about the axial line O, and a truncated conical tapered neck portion 8 having an outer diameter which gradually increases toward the rear end side is formed on the distal end side of the shank portion 4. The outer peripheral surface of the tapered neck portion 8 intersects the outer peripheral surface of the shank portion 4 on the rear end side, and a distal end surface (distal end surface of the holder 2) of the tapered neck portion 8 becomes a flat surface perpendicular to the axial line O.

In addition, an attachment bore 9 is formed in the center portion of the distal end surface and includes a recessed bore 9A, and the attachment bore includes a recessed bore 9A which has the axial line O as a center and has an inner diameter which gradually decreases toward the rear end side and a threaded bore 9B which further extends from the hole bottom of the recessed bore 9A toward the rear end side and has the axial line O as a center. In addition, a coolant hole 9C which extends from the rear end surface (rear end surface of the holder 2) of the shank portion 4 along the axial line O is open to the bottom surface of the threaded bore 9B.

The cutting head 3 includes a head body 10 which is formed of a material such as cemented carbide having high rigidity than that of the holder 2 and the cutting edge portion 7 is formed on the distal end portion of the head body 10.

Moreover, an attachment section 11 which protrudes toward the rear end side is provided at the center of the rear end portion of the head body 10.

The attachment section 11 includes a truncated conical protrusion part 11A which is integrally formed with the head body 10 and has an outer diameter which gradually decreases toward the rear end side about the axial line O, and a male thread part 11B which protrudes toward the rear end side of the protrusion part 11A and is twisted around the axial line O. An inclination angle between the truncated conical outer peripheral surface formed by the protrusion part 11A and the axial line O is the same as an inclination angle between the inner peripheral surface of the recessed bore 9A of the attachment bore 9 and the axial line O, and the male thread part 11B can be screwed into the threaded bore 9B.

In addition, the surface of the attachment section 11 which extends to the distal end outer peripheral side and faces the rear end side of the head body 10 becomes a flat surface perpendicular to the axial line O, and the male thread part 11B is screwed into the threaded bore 9B. Accordingly, the outer peripheral surface of the protrusion part 11A of the attachment section 11 comes into close contact with the inner peripheral surface of the recessed bore 9A, the surface facing the rear end side of the head body 10 abuts on the distal end surface of the holder 2, and the cutting head 3 is detachably attached to the distal end of the holder 2.

In addition, for example, the male thread part 11B is formed in a hollow shaft-shaped attachment member which is formed of a metal material such as a steel material similar to that of the holder 2, and a hole portion (not shown) into which a hollow shaft portion on the distal end side of the attachment member can be inserted is formed along the axial line O from the rear end surface of the protrusion part 11A of the head body 10 toward the distal end side. After the hollow shaft portion on the distal end side of the attachment member is inserted into the hole portion of the head body 10, the hollow shaft portion is plastically deformed such that the diameter thereof increases by pushing a pin having a slightly larger outer diameter than the inner diameter of the hollow shaft portion into the hollow shaft portion, and thus, the hollow shaft portion is caulked by the hole portion, and the attachment member is fixed to the head body 10.

In addition, a plurality of (four in the present embodiment) chip discharge grooves 7A which are open to the distal end (the distal end of the end mill body 1) of the head body 10 and are twisted to a side opposite to the end mill rotation direction T around the axial line O toward the rear end side are formed on the outer peripheral portion of the cutting edge portion 7 at intervals in the circumferential direction. A coolant ejection hole (not shown) is formed in at least one of the chip discharge grooves 7A or flank faces of the end cutting edges 5, and the coolant ejection hole communicates with the coolant hole 9C of the holder 2 via the hole portion of the head body and the inner peripheral portion of the hollow shaft portion.

In addition, the end cutting edge 5 extending from the inner peripheral side of the end mill body 1 to the outer peripheral side is formed on the distal end side edge portion of the wall surface of each of the chip discharge grooves 7A facing the end mill rotation direction T, and the tapered peripheral cutting edge 6 which extends from the outer peripheral end of the end cutting edge 5 to the rear end side and has the outer diameter of the cutting edge which gradually increases toward the rear end side is formed on the outer peripheral side edge portion of the wall surface. The end cutting edge 5 is formed such that a rotational locus thereof around the axial line O is formed in a hemispherical shape having a center on the axial line O, that is, the tapered end mill of the present embodiment is a tapered ball end mill.

A columnar (disk-shaped) straight neck portion 12 having the axial line O as a center is provided the rear end side of the cutting edge portion 7 and the attachment section 11. Accordingly, the straight neck portion 12 is integrally formed with the head body 10 along with the cutting edge portion 7, and the outer diameter of the straight neck portion 12 is the same as the outer diameter on the tapered neck portion 8 of the holder 2 on the distal end surface. The outer peripheral surface of the columnar straight neck portion 12 is parallel to the axial line O in the direction of the axial line O. In addition, the length of the straight neck portion 12 in the direction of the axial line O is sufficiently shorter than the length of the tapered neck portion 8 in the direction of the axial line O and is shorter than the length of the tapered peripheral cutting edge 6 of the cutting edge portion 7 in the direction of the axial line O.

Although not particularly limited, preferably, the length of the straight neck portion 12 in the direction of the axial line O is 0.06 times to 0.5 times the length of the tapered neck portion 8 in the direction of the axial line O, and more preferably, is 0.1 times to 0.25 times. Similarly, although not particularly limited, preferably, the length of the straight neck portion 12 in the direction of the axial line O is 0.16 times to 1.0 times the length of the tapered peripheral cutting edge 6 in the direction of the axial line O, and more preferably, is 0.25 times to 0.5 times.

In addition, an engaging recess 12A with which a work tool rotating the cutting head 3 around the axial line O engages is provided on the outer peripheral surface of the straight neck portion 12. In the present embodiment, the engaging recess 12A engages with the work tool such as a spanner or a wrench, and in two engaging recesss 12A in which bottom surfaces which are recessed from the outer peripheral surface of the straight neck portion 12 and are flat toward the outer peripheral side extend in a tangential direction of a circle having the axial line O as the center, the mutual bottom surfaces are parallel to each other and are symmetrically formed with respect to the axial line O.

In addition, as shown in FIG. 2, a neck half included angle α formed between the outer peripheral surface of the tapered neck portion 8 and the axial line O is set to be larger than an peripheral half included angle β formed between the rotational locus of the tapered peripheral cutting edge 6 around the axial line O and the axial line O. Although not particularly limited, preferably, the neck half included angle α is set to be larger by 0.06° to 4.9° than the peripheral half included angle β, and more preferably, is set to be larger by 0.29° to 1.3°.

Moreover, as shown in FIG. 2, a circle 8A of the outer peripheral surface of the tapered neck portion 8 formed on the rear end of the tapered neck portion 8, that is, a circle formed by intersection ridgelines of the outer peripheral surfaces of the tapered neck portion 8 and the shank portion 4 is positioned on a virtual conical surface P which is obtained by extending a truncated conical surface formed by the rotational locus of the tapered peripheral cutting edge 6 around the axial line O to the rear end side.

In the tapered end mill described as above, the columnar straight neck portion 12 having a constant outer diameter about the axial line O of the end mill body 1 is provided between the tapered peripheral cutting edge 6 of the cutting edge portion 7 and the tapered neck portion 8. Accordingly, as shown in FIG. 2, the outer peripheral surfaces of the straight neck portion 12 and the tapered neck portion 8 are retreated to the inner peripheral side of the end mill body 1 with respect to the virtual conical surface P which is obtained by extending the truncated conical surface formed by the rotational locus of the tapered peripheral cutting edge 6 around the axial line O to the rear end side.

Therefore, even in a case where a machining wall surface is formed on a workpiece by the tapered peripheral cutting edges 6, and thereafter, the end mill body 1 moves to the distal end side in the direction of the peripheral half included angle β, and deep shoulder milling machining or groove machining is performed to extend the machining wall surface formed by the tapered peripheral cutting edges 6 in advance, it is possible to secure a clearance between the machining wall surface formed by the tapered peripheral cutting edges 6 in advance and the end mill body 1. Accordingly, when this machining is performed, it is possible to prevent chips from being bitten into a portion between the end mill body 1 and the machining wall surface or the end mill body 1 from coming into contact with the machining wall surface, and thus, it is possible to smoothly perform cutting.

In addition, in the present embodiment, as described above, the neck half included angle α formed between the outer peripheral surface of the tapered neck portion 8 and the axial line O is set to be larger than the peripheral half included angle β of the tapered peripheral cutting edge 6, and for example, compared to a case where the neck half included angle α and the peripheral half included angle β are the same as each other or the like, it is possible to increase rigidity of the tapered neck portion 8. Accordingly, the outer peripheral surfaces of the straight neck portion 12 and the tapered neck portion 8 are retreated with respect to the virtual conical surface P, and thus, it is possible to prevent the end mill body 1 from being curved or bent, it is possible to prevent vibrations or the like from easily occurring during machining, and it is possible to smoothly perform the cutting. In addition, in the present embodiment, the length of the straight neck portion 12 in the direction of the axial line O is sufficiently shorter than that of the tapered neck portion 8, and thus, it is possible to further improve the rigidity.

Moreover, in the present embodiment, in addition to the neck half included angle α being set to be larger than the peripheral half included angle β, the circle 8A formed on the rear end of the outer peripheral surface of the tapered neck portion 8 is positioned on the virtual conical surface P. Accordingly, as shown in FIG. 2, a length L from the distal end of the tapered peripheral cutting edge 6 to the circle 8A on the rear end of the tapered neck portion 8 in the direction of the axial line O can be the same as that of a tapered end mill of the related art which does not have the straight neck portion 12. Accordingly, it is possible to prevent the length L from increasing by only providing the straight neck portion 12, and thus, it is possible to prevent the end mill body 1 from being curved or bent during cutting and it is possible to further reliably prevent vibrations or the like.

Moreover, as described above, the tapered end mill of the present embodiment is the tapered ball end mill, and for example, the tapered ball end mill is used so as to form a recessed portion having a curved bottom surface in a mold. Accordingly, even in a case where the recessed portion having a deep depth is formed, as described above, it is possible to secure a clearance between the wall of the machining wall surface of the recessed portion and the end mill body 1 on the wall surface, which is particularly effective. In the present embodiment, the present invention is applied to the tapered ball end mill. However, it is needless to say that the present invention is applied to a tapered end mill in which end cutting edges extend approximately along a plane orthogonal to an axial line and intersect outer peripheral edges with angles or a tapered radius end mill in which corner portions of end cutting edges and outer peripheral edges are formed in convex curve shapes such as an arc.

In addition, the tapered end mill of the present embodiment is not only the tapered ball end mill but also an exchangeable head tapered end mill in which the end mill body 1 includes the holder 2 on the rear end side and the cutting head 3 which is detachably attached to the distal end of the holder 2. In addition, since the columnar straight neck portion 12 having the outer diameter which is equal to or less than the outer diameter of the tapered neck portion 8 is formed in the head body 10 of the cutting head 3 formed of a hard material such as cemented carbide which is the same as that of the cutting edge portion 7, it is possible to further improve the rigidity.

Since the tapered neck portion 8 having the outer diameter which gradually increases from the outer diameter of the straight neck portion 12 toward the rear end side and the shank portion 4 which is positioned on the rear end side of the tapered neck portion 8 and has the largest diameter are formed of a steel material or the like which has a lower cost than that of cemented carbide or the like, it is possible to reduce the cost of the entire tapered end mill. In the present embodiment, the present invention is applied to the exchangeable head tapered end mill. However, it goes without saying that the present invention is applied to a solid type tapered end mill in which the entire end mill body is formed of a hard material such as cemented carbide.

In addition, in the tapered end mill of the present embodiment which is the exchangeable head tapered end mill, the cutting edge portion 7 is provided on the distal end portion of the head body 10 of the cutting head 3, the straight neck portion 12 is provided on the rear end portion, and the attachment section 11 for detachably attaching the cutting head 3 to the holder 2 is provided on the straight neck portion 12. In addition, in the attachment section 11, the outer peripheral surface of the protrusion part 11A comes into close contact with the inner peripheral surface of the recessed bore 9A of the holder 2 and the surface facing the rear end side of the head body 10 abuts the distal end surface of the holder 2. Accordingly, the attachment section 11 is fixed to be restricted by the two surfaces, and thus, it is possible to securely attach the cutting head 3 to the holder 2.

Moreover, the male thread part (screw portion) 11B which is twisted around the axial line O is provided in the attachment section 11, and the male thread part 11B is screwed into the threaded bore 9B of the holder 2. Accordingly, as described above, the protrusion part 11A comes into close contact with the recessed bore 9A, the surface facing the rear end side of the head body 10 abuts on the distal end surface of the holder 2, and thus, the cutting head 3 is fixed to the holder 2. In addition, in order to screw the male thread part 11B into the threaded bore 9B, in the present embodiment, the engaging recess 12A with which a work tool engages is formed on the outer peripheral surface of the straight neck portion 12. Accordingly, it is possible to secure a larger clearance between the straight neck portion 12 and the machining wall surface in the engaging recess 12A, and it is possible to more reliably prevent biting of chips or the like.

### Industrial Applicability

It is possible to smoothly perform cutting by an end mill, and thus, the present invention can be applied to manufacturing of various parts.

### Reference Signs List

1: end mill body
2: holder
3: cutting head
4: shank portion
5: end cutting edge
6: tapered peripheral cutting edge
7: cutting edge portion
7A: chip discharge groove
8: tapered neck portion
8A: circle of outer peripheral surface of tapered neck portion 8 formed on rear end of tapered neck portion 8
9: attachment bore
9A: recessed bore
9B: threaded bore
10: head body
11: attachment section
11A: protrusion part
11B: male thread part
12: straight neck portion
12A: engaging recess
O: axial line of end mill body 1
T: end mill rotation direction
P: virtual conical surface obtained by extending truncated conical surface formed by rotational locus of tapered peripheral cutting edge 6 around axial line O to rear end side
L: length from distal end of tapered peripheral cutting edge 6 to circle 8A on rear end of tapered neck portion 8 in direction of axial line O
α: neck half included angle
β: peripheral half included angle

## Claims

1. A tapered end mill, comprising:
a cutting edge portion which includes an end cutting edge which extends from an inner peripheral side of an end mill body to an outer peripheral side thereof and a tapered peripheral cutting edge which extends from an outer peripheral end of the end cutting edge to a rear end side and has a cutting edge diameter which gradually increases toward the rear end side, the cutting edge portion being provided on a distal end portion of the end mill body to be rotated around an axial line,
wherein a truncated conical tapered neck portion having an outer diameter which gradually increases toward the rear end side is provided on the rear end side of the cutting edge portion, and
wherein a columnar straight neck portion is provided about the axial line between the cutting edge portion and the tapered neck portion.

2. The tapered end mill according to claim 1,
wherein a neck half included angle formed between an outer peripheral surface of the tapered neck portion and the axial line is set to be larger than an peripheral half included angle formed between a rotational locus of the tapered peripheral cutting edge around the axial line and the axial line.

3. The tapered end mill according to claim 2,
wherein a circle of the outer peripheral surface of the tapered neck portion formed on a rear end of the tapered neck portion is positioned on a virtual conical surface which is obtained by extending a truncated conical surface formed by the rotational locus of the tapered peripheral cutting edge around the axial line to the rear end side.

4. The tapered end mill according to any one of claims 1 to 3,
wherein the end cutting edge is formed such that a rotational locus of the end cutting edge around the axial line is formed in a hemispherical shape having a center on the axial line.

5. The tapered end mill according to any one of claims 1 to 4,
wherein the end mill body includes a holder on the rear end side and a cutting head which is detachably attached to a distal end of the holder, and
wherein the tapered neck portion is provided in the holder and the cutting edge portion and the straight neck portion are provided in the cutting head.

6. A cutting head of the tapered end mill according to claim 5,
wherein the cutting edge portion is provided in a distal end portion and the straight neck portion is provided in a rear end portion, and
wherein an attachment section by which the cutting head is detachably attached to the holder is provided in the straight neck portion.

7. The cutting head according to claim 6,
wherein a thread part twisted around the axial line is provided in the attachment section, and
wherein an engaging recess with which a work tool rotating the cutting head around the axial line engages is provided on an outer peripheral surface of the straight neck portion.
